# EUROPEAN PATENT SPECIFICATION

(11) **EP 2 160 023 B1**
(45) Date of publication and mention of the grant of the patent: **17.07.2013**
(21) Application number: 09155625.8
(22) Date of filing: 19.03.2009
(51) Int. Cl.: H04N 5/44, H04N 5/63, H04N 21/436, H04N 21/41

(54) **Broadcast receiving apparatus capable of communicating with external apparatus and method for using content**
Rundfunkempfangsvorrichtung, die mit einer externen Vorrichtung kommunizieren kann, und Verfahren zur Verwendung von Inhalten
Appareil de réception de diffusion capable de communiquer avec un appareil externe et procédé d'utilisation du contenu

(30) Priority: 01.09.2008 KR 20080085943
(43) Date of publication of application: 03.03.2010
(73) Proprietor: Samsung Electronics Co., Ltd., Suwon-si, Gyeonggi-do, 443-742 (KR)
(72) Inventor: Kim, Chi-Won, Gyeonggi-do (KR)
(74) Representative: Robinson, Ian Michael

(56) References cited:
- EP-A- 1 365 373
- EP-A- 1 376 938
- EP-A- 1 381 187
- EP-A- 1 653 736
- EP-A- 1 954 048
- US-A1- 2008 051 027
- US-B1- 6 851 116
- YOUN-KWAE JEONG ET AL: "A network level power management for home network devices" IEEE TRANSACTIONS ON CONSUMER ELECTRONICS, IEEE SERVICE CENTER, NEW YORK, NY, US, vol. 54, no. 2, 1 May 2008 (2008-05-01), pages 487-493, XP011229924 ISSN: 0098-3063
- 'TV-Manual Philips 21PT5520', [Online] 31 December 2005, PHILIPS WEBSITE WWW.SUPPORT.PHILIPS.COM, pages 1 - 16, XP055002813 Retrieved from the Internet: <URL:http://download.p4c.philips.com/files/ 2/21pt5520_01/21pt5520_01_dfu_eng.pdf> [retrieved on 2011-07-14]

## Description

### BACKGROUND OF THE INVENTION

### 1. Field of the Invention

Apparatuses and methods consistent with the present invention relate to a broadcast receiving apparatus and a method for using content received from the broadcast receiving apparatus, and more particularly, to a broadcast receiving apparatus which functions as a content server, an external apparatus which receives content from the broadcast receiving apparatus, and a method for using the content.

### 2. Description of the Related Art

EP-A-1,653,736 mentions a power saving apparatus and method for a television receiver system. The claims have been characterised based on this document.

A wide range of apparatuses are commonly used in homes, including information devices such as personal computers (PCs), communication devices such as telephones, broadcast receiving apparatuses such as televisions (TVs) or set-top boxes (STBes), and audio and video (AV) devices such as digital video disc players (DVDP) or digital cameras. Such apparatuses used in the home may be connected to each other to construct a home network and may be linked to various external networks. Accordingly, users may conveniently use various functions in a home.

### SUMMARY OF THE INVENTION

According to the present invention there is provided an apparatus and method as set forth in the appended claims. Other features of the invention will be apparent from the dependent claims, and the description which follows.

The present invention provides a content distribution system comprising a broadcast receiving apparatus which transmits content data a user desires to receive to an external apparatus and which controls a display unit of the broadcast receiving apparatus to be turned off, in order for the user to be provided with content continuously when the user moves to another place or after a predetermined period of time has elapsed, and in order to prevent unnecessary power consumption.

According to an aspect of the present invention, there is provided a content distribution system comprising a broadcast receiving apparatus which receives a signal and a signal processing unit which processes that signal, and a communications unit which transmits that signal to at least one external apparatus.

According to an aspect of the present invention, there is provided a broadcast receiving apparatus comprising a display unit which displays content, a signal processing unit which performs signal processing on the content according to the display specifications of the display unit, a communication unit which transmits the content to at least one external apparatus, and a control unit which controls the communication unit to transmit the content to the at least one external apparatus if a transmission request command for the content is received, and selectively controls the display state of the display unit.

The control unit may control the display unit to be turned off or to remain on if a command to control the display state of the display unit is received from the at least one external apparatus.

The broadcast receiving apparatus may further comprise a power supply unit which supplies power to the display unit. The control unit may transmit the content to the at least one external apparatus and may control the power supply unit so that the power supply to the display unit may be automatically cut off, or the control unit may receive a command to turn off the display unit and may control the power supply unit to cut off the power supply to the display unit.

The broadcast receiving apparatus may further comprise a storage unit which stores the content. After storing the content in the storage unit, the control unit may transmit the stored content to the at least one external apparatus if a predetermined period of time has elapsed or if the transmission request command is received from the at least one external apparatus.

The control unit may store the content in the storage unit from a time at which a recording request command for the content is received, if the recording request command is received from the at least one external apparatus.

The control unit may transmit information on the time to the at least one external apparatus or to a reply apparatus for replying communication with the at least one external apparatus.

The control unit may transmit the content to the at least one external apparatus via the communication unit at preset intervals.

The broadcast receiving apparatus may further comprise a plurality of tuners which tune to the content. The control unit may transmit content output from the plurality of tuners to the at least one external apparatus via the communication unit.

The control unit may provide a menu to control the display state of the display unit using the display unit or using the communication unit if the content is transmitted to the at least one external apparatus. The control unit may turn off the display unit if the display unit is determined to be turned off through the menu.

According to another aspect of the present invention, there is provided an external apparatus capable of communicating with a broadcast receiving apparatus, the external apparatus comprising an input unit which receives a transmission request command for content, a communication unit which transmits the transmission request command to the broadcast receiving apparatus and receives the content if the transmission request command is received, a display unit which displays the content received via the communication unit, and a control unit which transmits a command to control the display state of the broadcast receiving apparatus to the broadcast receiving apparatus via the communication unit if the content is received.

The control unit may display a menu to control the display state of the broadcast receiving apparatus on the display unit, and may transmit a command to turn off the broadcast receiving apparatus to the broadcast receiving apparatus via the communication unit if the command to turn off the broadcast receiving apparatus is received through the menu.

The control unit may transmit a recording request command to request recording of the content on the broadcast receiving apparatus to the broadcast receiving apparatus, and may generate an icon corresponding to the content.

According to another aspect of the present invention, there is provided a method for using content in a broadcast receiving apparatus comprising a display unit, the method comprising performing signal processing on the content according to the display specifications of the display unit, displaying the content, transmitting the content to at least one external apparatus if a transmission request command for the content is received, and selectively controlling the display state of the display unit.

The controlling may comprise controlling the display unit to be turned off or to remain on if a command to control the display state of the display unit is received from the at least one external apparatus.

The controlling may comprise cutting off power supply to the display unit if a command to turn off the display unit is received.

The transmitting may comprise, after storing the content, transmitting the stored content to the at least one external apparatus if a predetermined period of time has elapsed or if the transmission request command is received from the at least one external apparatus.

The transmitting may comprise storing the content from a time at which a recording request command for the content is received, if the recording request command is received from the at least one external apparatus.

The transmitting may further comprise transmitting information on the time to the at least one external apparatus or to a reply apparatus for replying communication with the at least one external apparatus.

The transmitting may comprise transmitting the content to the at least one external apparatus at preset intervals.

The method may further comprise tuning to the content using a plurality of tuners. The transmitting may comprise transmitting content output from the plurality of tuners to the at least one external apparatus.

The controlling may comprise providing a menu to control the display state of the display unit using the display unit or using the at least one external apparatus if the content is transmitted to the at least one external apparatus, and turning off the display unit if the display unit is determined to be turned off through the menu.

According to another aspect of the present invention, there is provided a method for using content in an external apparatus capable of communicating with a broadcast receiving apparatus, the method comprising receiving a transmission request command for content, transmitting the transmission request command to the broadcast receiving apparatus and receiving the content if the transmission request command is received, displaying the received content, and transmitting a display-off command to control whether to turn off the broadcast receiving apparatus to the broadcast receiving apparatus.

The transmitting of the display-off command may comprise displaying a menu to control the display state of the broadcast receiving apparatus, and transmitting the display-off command to the broadcast receiving apparatus if the broadcast receiving apparatus is determined to be turned off through the menu.

The method may further comprise, prior to the receiving of the transmission request command, transmitting a recording request command to request recording of the content on the broadcast receiving apparatus to the broadcast receiving apparatus, and generating an icon corresponding to the content.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a schematic block diagram of a broadcast receiving apparatus and an external apparatus according to an exemplary embodiment of the present invention;

FIG. 2 is a block diagram of an exemplary system to which the present invention is applicable;

FIG. 3 is a flowchart explaining operations of a broadcast receiving apparatus according to an exemplary embodiment of the present invention; and

FIG. 4 is a flowchart explaining operations of an external apparatus according to an exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

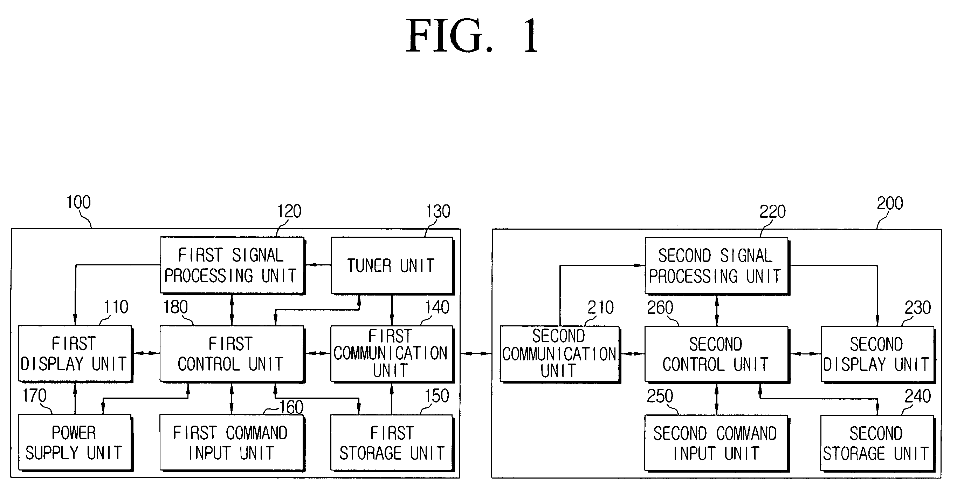

FIG. 1 is a schematic block diagram of a broadcast receiving apparatus 100 and an external apparatus 200 according to an exemplary embodiment of the present invention.

The broadcast receiving apparatus 100 of FIG. 1 comprises a first display unit 110, a first signal processing unit 120, a tuner unit 130, a first communication unit 140, a first storage unit 150, a first command input unit 160, a power supply unit 170 and a first control unit 180.

The tuner unit 130 tunes to a broadcast signal received terrestrially or via cable or satellite, performs signal processing such as demodulation or error correction on the tuned broadcast signal, and outputs the processed broadcast signal. The tuner unit 130 may comprise a plurality of tuners, so it is possible to tune to a plurality of broadcast signals using the plurality of tuners. In this situation, each of the plurality of broadcast signals tuned by the plurality of tuners may be transmitted to a plurality of external apparatuses, respectively.

The first signal processing unit 120 separates the broadcast signal output from the tuner unit 130 into video data, audio data and a variety of additional data, and decodes the separated video data, audio data and additional data. The first signal processing unit 120 performs signal processing on the video data so that the video data conforms to a vertical frequency, resolution and screen ratio among the display specifications of the first display unit 110. Additionally, the first signal processing unit 120 converts the audio data into an analog signal able to be output through speakers (not shown), and outputs the converted analog signal. The first signal processing unit 120 also performs signal processing on the additional data so that the additional data may be displayed on the first display unit 110 or may be output through speakers (not shown).

The first display unit 110 displays the video data output from the first signal processing unit 120 on a screen. The first display unit 110 may be implemented as various display modules, for example digital light processing (DLP), a liquid crystal display (LCD) or a plasma display panel (PDP). A user may access a variety of content using video displayed on the first display unit 110 or using audio output via speakers.

The first communication unit 140 communicates with the external apparatus 200 in order to transceive a variety of data, under the control of the first control unit 180. In more detail, the first communication unit 140 transmits the broadcast signal output from the tuner unit 130 to the external apparatus 200, receives control information from the external apparatus 200, and transfers the received control information to the first control unit 180. The first communication unit 140 may communicate with the external apparatus 200 using a wireless connection such as a wireless local area network (WLAN) or Bluetooth, or a wired connection such as a universal serial bus (USB).

In the exemplary embodiment of the present invention, the first communication unit 140 is connected to the external apparatus 200 via a USB cable, and performs initial authentication for the external apparatus 200. Additionally, it is possible for the first communication unit 140 to wirelessly communicate with the external apparatus 200 using plug-and-play wireless connectivity, so there is no need to perform additional authentication for wireless communication. The first communication unit 140 may access the Internet using a protocol, such as a transmission control protocol/Internet protocol (TCP/IP), to communicate with the external apparatus 200.

The first storage unit 150 stores the broadcast signal tuned and demodulated by the tuner unit 130, and the broadcast signal stored in the first storage unit 150 is transmitted to the external apparatus 200 via the first communication unit 140. The first storage unit 150 stores information on a time at which a user requests storage of a predetermined broadcast signal, and the information on the time stored in the first storage unit 150 is transmitted to a broadcast station (not shown) via the first communication unit 140. The first storage unit 150 may be implemented as a non-volatile memory, such as a flash memory, which retains stored information even when the broadcast receiving apparatus 100 is turned off.

The first command input unit 160 comprises an infrared receiving unit which receives a signal from a predetermined key and remote controller (not shown) for receiving user commands. The first command input unit 160 transfers a key signal corresponding to a user command to the first control unit 180. For example, the first command input unit 160 enables a user to enter a recording request command to record a desired broadcast program in the first storage unit 150 while the broadcast program is being viewed. Additionally, the first command input unit 160 enables the user to enter a transmission request command to transmit the broadcast program recorded in the first storage unit 150 to the external apparatus 200. Furthermore, the first command input unit 160 receives a user command to turn the first display unit 110 on or off and transfers the received user command to the first control unit 180.

The power supply unit 170, although not illustrated in detail, supplies power required to operate components of the broadcast receiving apparatus 100. In more detail, the power supply unit 170 supplies power to operate the first display unit 110, and cuts off the power supply to the first display unit 110 under the control of the first control unit 180.

If a user command is input through the first command input unit 160, the first control unit 180 controls the components of the broadcast receiving apparatus 100 to perform a function corresponding to the input user command. The first control unit 180 may be implemented as a microcomputer or a central processing unit (CPU). The first control unit 180 controls the first communication unit 140 to transmit a broadcast signal to the external apparatus 200 in response to a request from the external apparatus 200, and controls whether the first display unit 110 is turned on or off according to control information transmitted from the external apparatus 200.

For example, if a user desires to move to another location within the home while using content provided by the broadcast receiving apparatus 100 in the home, he or she may enter a transmission request command to transmit a broadcast signal corresponding to currently used content to the external apparatus 200, using the external apparatus 200 or the first command input unit 160. In more detail, if the user enters the transmission request command using the external apparatus 200, the transmission request command may be transferred to the first control unit 180 via the first communication unit 140, and the first control unit 180 may then control the first communication unit 140 to transmit a broadcast signal tuned by the tuner unit 130 to the external apparatus 200. In this situation, the broadcast receiving apparatus 100 may function as a relay apparatus, so the user may continue to use the content using the external apparatus 200 in real time.

Additionally, for example, if a user desires to reuse previously used content even after a predetermined period of time has elapsed, while using content provided by the broadcast receiving apparatus 100 in the home, he or she may enter a recording request command to record a broadcast signal corresponding to currently used content in the first storage unit 150, using the external apparatus 200 or the first command input unit 160. In more detail, if the user enters the recording request command using the external apparatus 200, the recording request command may be transferred to the first control unit 180 via the first communication unit 140, and the first control unit 180 may then store the broadcast signal corresponding to the currently used content in the first storage unit 150 based on information on the time at which the recording request command is input. Additionally, the first control unit 180 may control the first communication unit 140 to transmit the broadcast signal recorded in the first storage unit 150 to the external apparatus 200, in response to a transmission request command input to the external apparatus 200 or to the first command input unit 160. In this situation, the broadcast receiving apparatus 100 may function as a recorder, so the user may reuse the content that was used before the predetermined period of time, using the external apparatus 200.

Furthermore, for example, if a user desires to move from his or her home to his or her office and continue to use content in the office, while using the content provided by the broadcast receiving apparatus 100 in the home, he or she may enter a recording request command to record a broadcast signal corresponding to currently used content in the first storage unit 150, using the external apparatus 200 or the first command input unit 160. In this situation, information on the time at which the broadcast signal starts to be recorded on the first storage unit 150 may be transferred directly to the external apparatus 200 or transferred to a reply apparatus for replying communication with the external apparatus 200. Here, the reply apparatus may be, for example, a broadcast station. In other words, when a user is watching a drama, if a predetermined scene of the drama is displayed, information on whether a recording request command has been input may be transferred to a broadcast station.

Additionally, after moving to his or her office, the user may access the Internet using the external apparatus 200, and may transmit to the broadcast receiving apparatus 100 a command to request transmission of the broadcast signal stored on the first storage unit 150. In this situation, the user may check the information on the time based on web pages provided by the broadcast station. In response to the command to request transmission of the broadcast signal, the first control unit 180 may control the first communication unit 140 to transmit the broadcast signal to the external apparatus 200. Accordingly, the user may use the broadcast receiving apparatus 100 as a server.

In the above-exemplified situations, the first control unit 180 may transmit a broadcast signal corresponding to content used by the user to the external apparatus 200 via the first communication unit 140, and may then send a message to the external apparatus 200 asking whether to turn off the first display unit 110. The first control unit 180 may control the first display unit 110 to remain on or to be turned off according to a user control command input to the external apparatus 200. Accordingly, the first control unit 180 may cut off power supply to the first display unit 110 according to the user control command in order to prevent unnecessary power consumption.

Alternatively, after transmitting a broadcast signal corresponding to content used by the user to the external apparatus 200 via the first communication unit 140, if the first display unit 110 is turned on, the first control unit 180 may control the first display unit 110 to be turned off.

The first control unit 180 may cut off power supply to the first display unit 110 to prevent power from being consumed unnecessarily, as described above, but other various methods according to the type of display module applicable to the first display unit 110 may also be used to prevent unnecessary power consumption. For example, if a PDP module is applied to the first display unit 110, the first control unit 180 may cause the entire screen of the PDP module to appear black in order to reduce power consumption. Alternatively, if an LCD module is applied to the first display unit 110, the first control unit 180 may control the brightness of the LCD module using a dimming method to reduce power consumption.

The first control unit 180 may set intervals for transmitting a broadcast signal from the broadcast receiving apparatus 100 to the external apparatus 200. For example, if a user desires to view news every hour, a broadcast signal corresponding to the news may be transmitted to the external apparatus 200 every hour. Accordingly, there is no need to input a separate command to request recording or transmission of frequently used content every time.

While the content used by the user corresponds to a broadcast signal in the exemplary embodiment of the present invention, the user may also use content transmitted from an external source apparatus such as a digital video disc players (DVDP) or video player. In this situation, the broadcast receiving apparatus 100 may further comprise a receiving unit which receives a variety of content transmitted from the external source apparatus.

Referring back to FIG. 1, the external apparatus 200 comprises a second communication unit 210, a second signal processing unit 220, a second display unit 230, a second storage unit 240, a second command input unit 250 and a second control unit 260.

The second communication unit 210 may communicate with the broadcast receiving apparatus 100 using a wireless connection such as a WLAN or Bluetooth, or a wired connection such as a universal serial bus (USB), in order to transceive a variety of data. In more detail, the second communication unit 210 receives a broadcast signal from the broadcast receiving apparatus 100, and transmits a user command input through the external apparatus 200 to the broadcast receiving apparatus 100 under the control of the second control unit 260.

In the exemplary embodiment of the present invention, the second communication unit 210 is connected to the broadcast receiving apparatus 100 via a USB cable, and performs initial authentication for the broadcast receiving apparatus 100. Additionally, it is possible for the second communication unit 210 to wirelessly communicate with the broadcast receiving apparatus 100 using plug-and-play wireless connectivity, so there is no need to perform additional authentication for the wireless communication. The second communication unit 210 may access the Internet using a protocol, such as a TCP/IP, to communicate with the broadcast receiving apparatus 100.

The second signal processing unit 220 separates the broadcast signal received via the second communication unit 210 from the broadcast receiving apparatus 100 into video data, audio data and a variety of additional data, and decodes the separated video data, audio data and additional data. The second signal processing unit 220 performs signal processing on the video data so that the video data conforms to a vertical frequency, resolution and screen ratio among the display specifications of the second display unit 230. Additionally, the second signal processing unit 220 converts the audio data into an analog signal able to be output through speakers (not shown), and outputs the converted analog signal. The second signal processing unit 220 also performs signal processing on the additional data so that the additional data may be displayed on the second display unit 230 or may be output through speakers (not shown).

The second display unit 230 displays the video data output from the second signal processing unit 220 on a screen. Here, the external apparatus 200 may be implemented as a mobile phone, an electric picture frame or a home automation display apparatus. If the external apparatus 200 is a mobile phone contained in a mobile device having a display function, the second display unit 230 is made to appear smaller. Accordingly, the second display unit 230 may be implemented as a display module such as an LCD or an organic electroluminescence display (OELD). A user may access a variety of content using video displayed on the second display unit 230 or using audio output via speakers.

The second storage unit 240 stores a variety of software and data required to operate the external apparatus 200. Additionally, the second storage unit 240 stores icons corresponding to content requested to be recorded or transmitted by the broadcast receiving apparatus 100. Specifically, if a user inputs a recording request command to store content currently provided by the broadcast receiving apparatus 100 in the second storage unit 240 using the external apparatus 200, an icon corresponding to the content may be generated and stored in the second storage unit 240. If the generated icon is displayed on the second display unit 230, the user may select the displayed icon so as to request a broadcast signal corresponding to the content from the broadcast receiving apparatus 100. Alternatively, if a user inputs a transmission request command to transmit content currently provided by the broadcast receiving apparatus 100 using the external apparatus 200, an icon corresponding to the content may be generated.

The second command input unit 250 comprises a predetermined key to receive a user command. The second command input unit 250 may receive a signal from a remote controller (not shown). The second command input unit 250 may be combined with the second display unit 230 to be implemented as a touch screen, according to the situation. If a user command is input through the second command input unit 250, the second command input unit 250 transfers a key signal corresponding to the user command to the second control unit 260. Accordingly, it is possible for a user to input a recording request command and transmission request command to the external apparatus 200 via the second command input unit 250, and to input a display-off command to turn off the first display unit 110.

As described above, a user may continue to use content, which has been provided by the broadcast receiving apparatus 100, using the external apparatus 200. Additionally, it is possible to prevent unnecessary power consumption by turning off the first display unit 110.

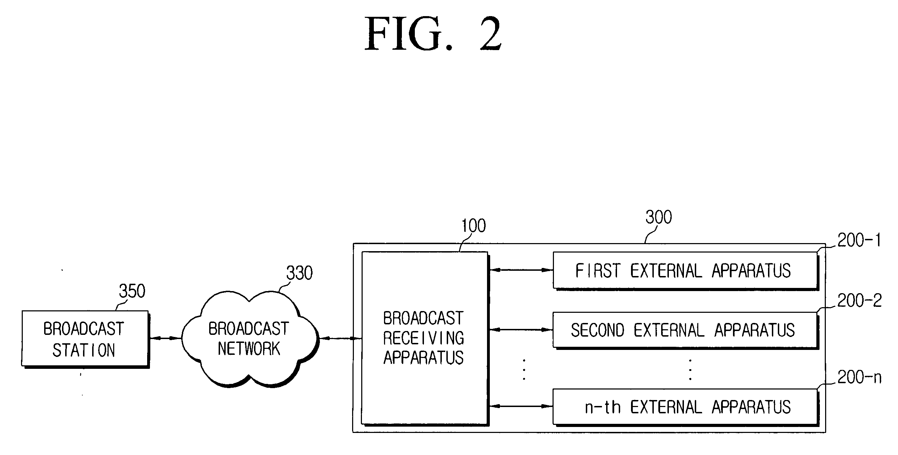

FIG. 2 exemplarily shows a system comprising a broadcast receiving apparatus 100 and a plurality of external apparatuses 200-1, 200-2, ...., 200-n.

Referring to FIG. 2, the broadcast receiving apparatus 100 is able to communicate with the plurality of external apparatuses 200-1, 200-2, ...., 200-n in a home 300. The broadcast receiving apparatus 100 receives a broadcast signal from a broadcast station 350 via a broadcast network 330, tunes to the received broadcast signal, demodulates the tuned broadcast signal and transmits the demodulated broadcast signal to the plurality of external apparatuses 200-1, 200-2, ...., 200-n. Here, the broadcast receiving apparatus 100 comprises a plurality of tuners, so it is possible for users to use desired content using the broadcast receiving apparatus 100 by manipulating the plurality of external apparatuses 200-1, 200-2, ...., 200-n.

The plurality of external apparatuses 200-1, 200-2, ...., 200-n shown in FIG. 2 are configured in the same manner as the external apparatus 200 shown in FIG. 1.

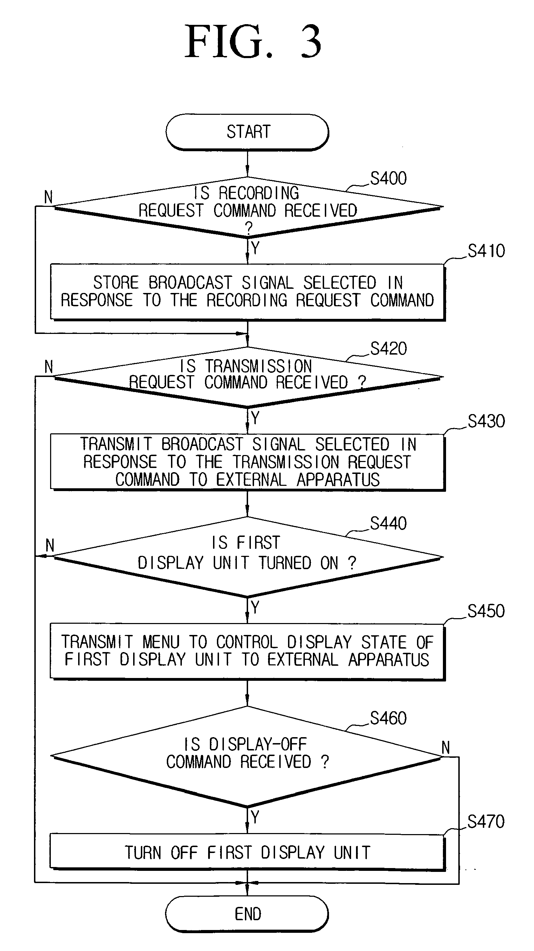

FIG. 3 is a flowchart explaining operations of the broadcast receiving apparatus 100 according to an exemplary embodiment of the present invention.

In FIG. 3, if a recording request command is received (S400-Y), the broadcast receiving apparatus 100 stores a broadcast signal selected in response to the recording request command (S410). In more detail, if a user enters a recording request command to store a broadcast signal corresponding to content currently provided by the broadcast receiving apparatus 100, the first control unit 180 records the broadcast signal selected using the broadcast receiving apparatus 100 in the first storage unit 150.

If a transmission request command is received (S420-Y), the broadcast receiving apparatus 100 transmits a broadcast signal selected in response to the transmission request command to the external apparatus 200 (S430). In more detail, if a user enters a transmission request command to transmit a broadcast signal corresponding to desired content to the external apparatus 200, the first control unit 180 controls the first communication unit 140 to transmit the broadcast signal recorded in the first storage unit 150 to the external apparatus 200.

If the recording request command is not received (S400-N) but if the transmission request command is received (S420-Y), the first control unit 180 controls the first communication unit 140 to transmit the broadcast signal received by the tuner unit 130 to the external apparatus 200 in real time.

In this situation, if the first display unit 110 is turned on (S440-Y), the first control unit 180 transmits a menu to control the display state of the first display unit 110 to the external apparatus 200 (S450). If a display-off command to turn off the first display unit 110 is received (S460-Y), the first control unit 180 turns off the first display unit 110 (S470). Here, the menu to control the display state of the first display unit 110 may be displayed on the first display unit 110. The display-off command may be input through the first command input unit 160, or may be input through the second command input unit 250 and transmitted to the broadcast receiving apparatus 100.

Accordingly, the broadcast receiving apparatus 100 may transmit a broadcast signal to the external apparatus 200 by the above-described method, so it is possible for the user to continue to use desired content. Additionally, it is possible to cut off power supply to the first display unit 110 to prevent unnecessary power consumption.

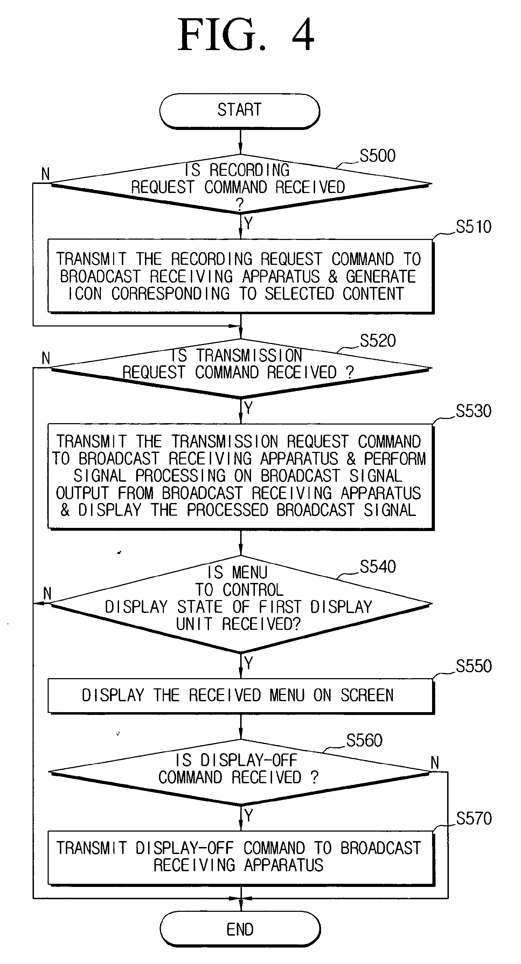

FIG. 4 is a flowchart explaining operations of the external apparatus 200 according to an exemplary embodiment of the present invention.

In FIG. 4, if a recording request command is received (S500-Y), the external apparatus 200 transmits the received recording request command to the broadcast receiving apparatus 100, and generates an icon corresponding to content selected in response to the recording request command (S510). In more detail, if a user enters a recording request command to store a broadcast signal corresponding to content currently provided by the broadcast receiving apparatus 100 in the first storage unit 150 through the second command input unit 250, the second control unit 260 transmits the recording request command to the broadcast receiving apparatus 100 via the second communication unit 210, generates an icon corresponding to the broadcast signal and stores the generated icon in the second storage unit 240.

In FIG. 4, if a recording request command is received (S500-Y), the external apparatus 200 transmits the received recording request command to the broadcast receiving apparatus 100, and generates an icon corresponding to content selected in response to the recording request command (S510). In more detail, if a user enters a recording request command to store a broadcast signal corresponding to content currently provided by the broadcast receiving apparatus 100 in the first storage unit 150 through the second command input unit 250, the second control unit 260 transmits the recording request command to the broadcast receiving apparatus 100 via the second communication unit 210, generates an icon corresponding to the broadcast signal and stores the generated icon in the second storage unit 240.

If a transmission request command is received (S520-Y), the external apparatus 200 transmits the received transmission request command to the broadcast receiving apparatus 100, performs signal processing on a broadcast signal output from the broadcast receiving apparatus 100, and displays the processed broadcast signal (S530). Accordingly, a user may access desired content by selecting an icon displayed on the external apparatus 200.

If the menu to control the display state of the first display unit 110 is received from the broadcast receiving apparatus 100 (S540-Y), the external apparatus 200 displays the received menu on a screen (S550). If the display-off command to turn off the first display unit 110 is received (S560-Y), the external apparatus 200 transmits the display-off command to the broadcast receiving apparatus 100 (S570).

If the recording request command is not received (S500-N) but if the transmission request command is received (S520-N), an icon corresponding to content selected in response to the transmission request command is generated.

Therefore, the external apparatus 200 may receive a broadcast signal corresponding to content a user desires to receive, and may display the received broadcast signal. Additionally, the external apparatus 200 may cut off power supply to the first display unit 110, thereby preventing unnecessary power consumption.

As described above, according to an exemplary embodiment of the present invention, it is possible to continuously provide a user with content even when the user moves to another place or after a predetermined period of time has elapsed. Additionally, it is possible to reduce unnecessary power consumption.

[84] Although a few preferred embodiments have been shown and described, it will be appreciated by those skilled in the art that various changes and modifications might be made without departing from the scope of the invention, as defmed in the appended claims.

## Claims

1. A broadcast receiving apparatus (100), comprising:
a tuner unit (130) which receives a content;
a display unit (110) which displays the received content;
a storage unit (150) which stores the content received from a time at which a recording request command is input when the content recording request command is input;
a communication unit (140) which transmits the content to at least one external apparatus (200); sand
a control unit (180) which controls the communication unit (140) to transmit the content stored in the storage unit (150) to the at least one external apparatus (200) when a transmission request command for the content is input and controls the display state of the display unit (110);
**characterised in that**:
the control unit (180) transmits a menu to be displayed by the external apparatus (200) to control the display state of the display unit (110) to the external apparatus (200) using the communication unit (140) at the time when the content is transmitted to the at least one external apparatus (200) in response to the transmission request command; and
wherein the control unit (180) controls the display unit (110) to be turned off or to remain on if a command to control the display state of the display unit (110) is received from the at least one external apparatus (200) in response to the menu displayed by the external apparatus (200).

2. The broadcast receiving apparatus (100) as claimed in claims 1, further comprising:
a power supply unit (170) which supplies power to the display unit (110), wherein the control unit (180) transmits the content to the at least one external apparatus (200) and controls the power supply unit (170).

3. The broadcast receiving apparatus (100) as claimed in claims 1 or 2, further comprising:
a power supply unit (170) which supplies power to the display unit (110),
wherein the control unit (180) receives a command to turn off the display unit (110) and controls the power supply unit (170) to cut off the power supply to the display unit (110).

4. The broadcast receiving apparatus (100) as claimed in any of claims 1 to 3, further comprising:
a storage unit (150) which stores the content,
wherein, after storing the content in the storage unit (150), the control unit (180) transmits the stored content to the at least one external apparatus (200) if a predetermined period of time has elapsed or if the transmission request command is received from the at least one external apparatus (200).

5. The broadcast receiving apparatus (100) as claimed in claim 4, wherein the control unit (180) stores the content in the storage unit (150) when a recording request command for the content is received, if the recording request command is received from the at least one external apparatus (200).

6. The broadcast receiving apparatus (100) as claimed in claim 5, wherein the control unit (180) transmits information on the time to the at least one external apparatus (200) or to a reply apparatus for replying to communication with the at least one external apparatus (200).

7. The broadcast receiving apparatus (100) as claimed in any of claims 1 to 6, further comprising:
a plurality of tuners (130) which tune to the content,
wherein the control unit (180) transmits content output from the plurality of tuners (130) to the at least one external apparatus (200) via the communication unit (140).

8. The broadcast receiving apparatus (100) as claimed in any of claims 1 to 7, wherein the control unit (180) provides a menu to control the display state of the display unit (110) using the display unit (110) or using the communication unit (140) if the content is transmitted to the at least one external apparatus (200), and
the control unit (180) turns off the display unit (110) if the display unit (110) is determined to be turned off through the menu.

9. A method for using content in a broadcast receiving apparatus (100) comprising a display unit (110), the method comprising:
receiving the content by a tuner (130);
displaying the content on a display unit (110);
storing the content received from a time at which a recording request command is input when the content recording request command is input; and
transmitting the content to at least one external apparatus (200) when a transmission request command for the content is input; and
controlling the display state of the display unit (110);
**characterised by**:
transmitting a menu to the external apparatus (200) to be displayed by the external apparatus (200) to control the display state of the display unit (110) in response to receiving the transmission request command and transmitting the content to the at least one external apparatus (200); and
controlling the display unit (110) to be turned off or to remain on if a command to control the display state of the display unit (110) is received from the at least one external apparatus (200) in response to the menu displayed by the external apparatus (200).

10. The method as claimed in claims 9, wherein the controlling comprises cutting off power supply to the display unit (110) if a command to turn off the display unit (110) is received.

11. The method as claimed in a claim 9 or 10, wherein the transmitting comprises, after storing the content, transmitting the stored content to the at least one external apparatus (200) if a predetermined period of time has elapsed or if the transmission request command is received from the at least one external apparatus (200).

## Patentansprüche

1. Rundfunkempfangsvorrichtung (100), die Folgendes umfasst:
eine Abstimmeinheit (130), die einen Inhalt empfängt;
eine Anzeigeeinheit (110), die den empfangenen Inhalt anzeigt;
eine Speichereinheit (150), die den Inhalt speichert, der ab einer Zeit empfangen wird, zu der ein Aufzeichnungsanforderungsbefehl eingegeben wird, wenn der Inhaltsaufzeichnungsanforderungsbefehl eingegeben wird;
eine Kommunikationseinheit (140), die den Inhalt zu wenigstens einer externen Vorrichtung (200) sendet; und
eine Steuereinheit (180), die die Kommunikationseinheit (140) steuert, um den in der Speichereinheit (150) gespeicherten Inhalt zu der wenigstens einen externen Vorrichtung (200) zu senden, wenn ein Sendeanforderungsbefehl für den Inhalt eingegeben wird, und den Anzeigezustand der Anzeigeeinheit (110) steuert;
**dadurch gekennzeichnet, dass**:
die Steuereinheit (180) ein Menü, das von der externen Vorrichtung (200) angezeigt werden soll, um den Anzeigezustand der Anzeigeeinheit (110) zu steuern, zu der externen Vorrichtung (200) unter Verwendung der Kommunikationseinheit (140) zu der Zeit sendet, zu der der Inhalt in Reaktion auf den Sendeanforderungsbefehl zu der wenigstens einen externen Vorrichtung (200) gesendet wird; und
wobei die Steuereinheit (180) die Anzeigeeinheit (110) steuert, damit sie abgeschaltet wird oder eingeschaltet bleibt, falls in Reaktion auf das durch die externe Vorrichtung (200) angezeigte Menü ein Befehl zum Steuern des Anzeigezustands der Anzeigeeinheit (110) von der wenigstens einen externen Vorrichtung (200) empfangen wird.

2. Rundfunkempfangsvorrichtung (100) nach Anspruch 1, die ferner Folgendes umfasst:
eine Stromversorgungseinheit (170), die der Anzeigeeinheit (110) Strom zuführt, wobei die Steuereinheit (180) den Inhalt zu der wenigstens einen externen Vorrichtung (200) sendet und die Stromversorgungseinheit (170) steuert.

3. Rundfunkempfangsvorrichtung (100) nach Anspruch 1 oder 2, die ferner Folgendes umfasst:
eine Stromversorgungseinheit (170), die der Anzeigeeinheit (110) Strom zuführt,
wobei die Steuereinheit (180) einen Befehl empfängt, um die Anzeigeeinheit (110) abzuschalten, und die Stromversorgungseinheit (170) steuert, um die Stromzufuhr zu der Anzeigeeinheit (110) zu unterbrechen.

4. Rundfunkempfangsvorrichtung (100) nach einem der Ansprüche 1-3, die ferner Folgendes umfasst:
eine Speichereinheit (150), die den Inhalt speichert,
wobei nach dem Speichern des Inhalts in der Speichereinheit (150) die Steuereinheit (180) den gespeicherten Inhalt zu der wenigstens einen externen Vorrichtung (200) sendet, falls eine vorgegebene Zeitperiode verstrichen ist oder falls der Sendeanforderungsbefehl von der wenigstens einen externen Vorrichtung (200) empfangen wird.

5. Rundfunkempfangsvorrichtung (100) nach Anspruch 4, wobei die Steuereinheit (180) den Inhalt in der Speichereinheit (150) speichert, wenn ein Aufzeichnungsanforderungsbefehl für den Inhalt empfangen wird, falls der Aufzeichnungsanforderungsbefehl von der wenigstens einen externen Vorrichtung (200) empfangen wird.

6. Rundfunkempfangsvorrichtung (100) nach Anspruch 5, wobei die Steuereinheit (180) Informationen über die Zeit zu der wenigstens einen externen Vorrichtung (200) oder zu einer Antwortvorrichtung, um auf die Kommunikation mit der wenigstens einen externen Vorrichtung (200) zu antworten, sendet.

7. Rundfunk Empfangsvorrichtung (100) nach einem der Ansprüche 1-6, die ferner Folgendes umfasst:
mehrere Abstimmeinrichtungen (130), die auf den Inhalt abstimmen,
wobei die Steuereinheit (180) Inhalt, der von den mehreren Abstimmeinrichtungen (130) ausgegeben wird, über die Kommunikationseinheit (140) zu der wenigstens einen externen Vorrichtung (200) sendet.

8. Rundfunkempfangsvorrichtung (100) nach einem der Ansprüche 1-7, wobei die Steuereinheit (180) ein Menü zum Steuern des Anzeigezustands der Anzeigeeinheit (110) unter Verwendung der Anzeigeeinheit (110) oder unter Verwendung der Kommunikationseinheit (140) bereitstellt, falls der Inhalt zu der wenigstens einen externen Vorrichtung (200) gesendet wird, und
die Steuereinheit (180) die Anzeigeeinheit (110) abschaltet, falls für die Anzeigeeinheit (110) bestimmt wird, dass sie durch das Menü abgeschaltet werden soll.

9. Verfahren zum Verwenden von Inhalt in einer Rundfunkempfangsvorrichtung (100), die eine Anzeigeeinheit (110) enthält, wobei das Verfahren Folgendes umfasst:
Empfangen des Inhalts durch eine Abstimmeinrichtung (130);
Anzeigen des Inhalts auf einer Anzeigeeinheit (110) ;
Speichern des Inhalts, der ab einer Zeit empfangen wird, zu der ein Aufzeichnungsanforderungsbefehl eingegeben wird, wenn der Inhaltsaufzeichnungsanforderungsbefehl eingegeben wird;
Senden des Inhalts zu wenigstens einer externen Vorrichtung (200), wenn ein Sendeanforderungsbefehl für den Inhalt eingegeben wird; und
Steuern des Anzeigezustands der Anzeigeeinheit (110) ;
**gekennzeichnet durch**:
Senden eines Menüs zu der externen Vorrichtung (200), das von der externen Vorrichtung (200) angezeigt werden soll, um den Anzeigezustand der Anzeigeeinheit (110) zu steuern, in Reaktion auf den Empfang des Sendeanforderungsbefehls, und Senden des Inhalts zu der wenigstens einen externen Vorrichtung (200); und
Steuern der Anzeigeeinheit (110), damit sie abgeschaltet wird oder eingeschaltet bleibt, falls ein Befehl zum Steuern des Anzeigezustands der Anzeigeeinheit (110) von der wenigstens einen externen Vorrichtung (200) empfangen wird, in Reaktion auf das von der externen Vorrichtung (200) angezeigte Menü.

10. Verfahren nach Anspruch 9, wobei das Steuern das Unterbrechen der Stromzufuhr zu der Anzeigeeinheit (110) umfasst, falls ein Befehl zum Abschalten der Anzeigeeinheit (110) empfangen wird.

11. Verfahren nach Anspruch 9 oder 10, wobei das Senden nach dem Speichern des Inhalts das Senden des gespeicherten Inhalts zu der wenigstens einen externen Vorrichtung (200) umfasst, falls eine vorgegebene Zeitperiode verstrichen ist oder falls der Sendeanforderungsbefehl von der wenigstens einen externen Vorrichtung (200) empfangen wird.

## Revendications

1. Appareil de réception de diffusion (100), comprenant :
- une unité de syntonisation (130) qui reçoit un contenu ;
- une unité d'affichage (110) qui affiche le contenu reçu ;
- une unité de stockage (150) qui stocke le contenu reçu à partir d'un moment auquel une instruction de requête d'enregistrement est entrée lorsque l'instruction de requête d'enregistrement de contenu est entrée ;
- une unité de communication (140) qui transmet le contenu à au moins un appareil externe (200) ; et
- une unité de commande (180) qui commande l'unité de communication (140) afin de transmettre le contenu stocké dans l'unité de stockage (150) vers ledit au moins un appareil externe (200) lorsqu'une instruction de requête de transmission concernant le contenu est entrée, et commande l'état d'affichage de l'unité d'affichage (110) ;
- **caractérisé en ce que** :
- l'unité de commande (180) transmet un menu à afficher par l'appareil externe (200) afin de commander l'état d'affichage de l'unité d'affichage (110) vers l'appareil externe (200) en utilisant l'unité de communication (140) au moment où le contenu est transmis audit au moins un appareil externe (200) en réponse à l'instruction de requête de transmission ; et
- dans lequel l'unité de commande (180) commande l'unité d'affichage (110) pour qu'elle soit éteinte ou demeure allumée si une instruction pour commander l'état d'affichage de l'unité d'affichage (110) est reçue dudit au moins un appareil externe (200) en réponse au menu affiché par l'appareil externe (200).

2. Appareil de réception de diffusion (100) selon la revendication 1, comprenant en outre une unité d'alimentation électrique (170) qui fournit de l'électricité à l'unité d'affichage (110), et dans lequel l'unité de commande (180) transmet le contenu audit au moins un appareil externe (200) et commande l'unité d'alimentation électrique (170).

3. Appareil de réception de diffusion (100) selon les revendications 1 ou 2, comprenant en outre :
- une unité d'alimentation électrique (170) qui envoie de l'électricité à l'unité d'affichage (110) ;
- dans lequel l'unité de commande (180) reçoit une instruction afin d'éteindre l'unité d'affichage (110) et commande l'unité d'alimentation électrique (170) afin de couper l'alimentation électrique vers l'unité d'affichage (110).

4. Appareil de réception de diffusion (100) selon l'une quelconque des revendications 1 à 3, comprenant en outre :
- une unité de stockage (150) stockant le contenu ;
- dans lequel, après avoir stocké le contenu dans l'unité de stockage (150), l'unité de commande (180) transmet le contenu stocké vers ledit au moins un appareil externe (200) si une durée prédéterminée s'est écoulée ou si l'instruction de requête de transmission est reçue dudit au moins un appareil externe (200).

5. Appareil de réception de diffusion (100) selon la revendication 4, dans lequel l'unité de commande (180) stocke le contenu dans l'unité de stockage (150) lorsqu'une instruction de requête d'enregistrement concernant le contenu est reçue, si l'instruction de requête d'enregistrement est reçue dudit au moins un appareil externe (200).

6. Appareil de réception de diffusion (100) selon la revendication 5, dans lequel l'unité de commande (180) transmet des informations sur le moment vers ledit au moins un appareil externe (200) ou vers un appareil de réponse afin de répondre à une communication avec ledit au moins un appareil externe (200).

7. Appareil de réception de diffusion (100) selon l'une quelconque des revendications 1 à 6, comprenant en outre :
- plusieurs syntoniseurs (130) qui syntonisent le contenu ;
- dans lequel l'unité de commande (180) transmet le contenu issu desdits plusieurs syntoniseurs (130) vers ledit au moins appareil externe (200) via l'unité de communication (140).

8. Appareil de réception de diffusion (100) selon l'une quelconque des revendications 1 à 7, dans lequel :
- l'unité de commande (180) fournit un menu pour commander l'état d'affichage de l'unité d'affichage (110) en utilisant l'unité d'affichage (110) ou l'unité de communication (140) si le contenu est transmis audit au moins un appareil externe (200) ; et
- l'unité de commande (180) éteint l'unité d'affichage (110) s'il est déterminé que l'unité d'affichage (110) doit être éteinte par le biais du menu.

9. Procédé d'utilisation de contenu dans un appareil de réception de diffusion (100) comprenant une unité d'affichage (110), lequel procédé consiste à :
- recevoir le contenu au niveau d'un syntoniseur (130) ;
- afficher le contenu sur une unité d'affichage (110) ;
- stocker le contenu reçu à partir d'un moment auquel une instruction de requête d'enregistrement est entrée lorsque l'instruction de requête d'enregistrement de contenu est entrée ;
- transmettre de contenu à au moins un appareil externe (200) lorsqu'une instruction de requête de transmission concernant le contenu est entrée ; et
- commander l'état d'affichage de l'unité d'affichage (110) ;
- **caractérisé en ce qu'**il consiste à :
- transmettre un menu à l'appareil externe (200) afin qu'il soit affiché par l'appareil externe (200) de manière à commander l'état d'affichage de l'unité d'affichage (110) en réponse à la réception de l'instruction de requête de transmission, et transmettre le contenu audit au moins un appareil externe (200) ; et
- commander l'unité d'affichage (110) pour qu'elle soit éteinte ou demeure allumée si une instruction pour commander l'état d'affichage de l'unité d'affichage (110) est reçue dudit au moins un appareil externe (200) en réponse au menu affiché par l'appareil externe (200).

10. Procédé selon la revendication 9, dans lequel la commande consiste à couper l'alimentation électrique vers l'unité d'affichage (110) si une instruction d'extinction de l'unité d'affichage (110) est reçue.

11. Procédé selon les revendications 9 ou 10, dans lequel la transmission consiste, après avoir stocké le contenu, à transmettre le contenu stocké vers ledit au moins un appareil externe (200) si une durée prédéterminée s'est écoulée ou si l'instruction de requête de transmission est reçue dudit au moins un appareil externe (200).
